# EUROPEAN PATENT SPECIFICATION

(11) **EP 4 361 047 B1**
(45) Date of publication and mention of the grant of the patent: **04.12.2024**
(21) Application number: 22204755.7
(22) Date of filing: 31.10.2022
(51) Int. Cl.: B64G 1/64, B29C 65/00, B64G 1/62, B64G 1/22

(54) **TWO-PART PASSIVE SEPARATION MECHANISM FOR SEPARATION OF TWO SPACECRAFT COMPONENTS DURING THE ATMOSPHERIC RE-ENTRY OF THE SPACECRAFT**
ZWEITEILIGER PASSIVER TRENNMECHANISMUS ZUR TRENNUNG VON ZWEI RAUMFAHRZEUGKOMPONENTEN WÄHREND DES ATMOSPHÄRISCHEN WIEDEREINTRITTS DES RAUMFAHRZEUGS
MÉCANISME DE SÉPARATION PASSIF EN DEUX PARTIES POUR SÉPARER DEUX COMPOSANTS D'ENGINS SPATIAUX PENDANT LA RENTRÉE ATMOSPHÉRIQUE DE L'ENGIN SPATIAL

(43) Date of publication of application: 01.05.2024
(73) Proprietor: Airbus Defence and Space GmbH, 82024 Taufkirchen (DE)
(72) Inventor: NASSAR RUIZ, Miguel, 78467 Konstanz (DE); WASSMANN, Christian, 88662 Überlingen (DE); VON ALBERTI, Mathias, 88677 Markdorf (DE)
(74) Representative: Schicker, Silvia

(56) References cited:
- EP-A1- 3 246 256
- US-A1- 2003 121 639
- US-A1- 2017 327 251
- US-A1- 2019 031 374
- US-A1- 2020 071 005
- US-B2- 11 299 298

## Description

The present invention relates to a separation mechanism for satellite or spacecraft components. While only the term spacecraft is used in the following, said term is intended to be understood as being interchangeably usable with the term satellite throughout the following description and claims.

In particular, the invention allows a first spacecraft component to detach from a second spacecraft component upon occurrence of a defined condition, especially upon earth atmospheric re-entry.

Earth atmospheric re-entry is the movement of an object from outer space through the gases of earth's atmosphere. Aerodynamic heating and atmospheric drag are two phenomena experienced by the object during atmospheric re-entry, which can cause its loss of mass and its fragmentation into smaller objects. Therefore, the larger is the exposure of an object to aerodynamic heating and atmospheric drag, the larger are the chances that the object demises in the atmosphere and does not reach earth's surface.

Spacecraft are often too large to completely demise during their earth atmospheric re-entry phase at their end of life. To avoid associated debris endangering people and property on earth, large spacecraft are often de-orbited and brought down to earth in a controlled way using propulsion systems, which entails significant additional costs for the overall mission and increased debris on earth. As an alternative approach, the spacecraft can be separated or broken-up into smaller pieces, early during the atmospheric re-entry phase, which would ensure its full demise.

It is known to separate spacecraft components with the use of active and/or passive separation mechanisms. Active separation mechanisms are generally complex and require the use of an electrical signal to initiate the separation functionality while their performance can degrade over time, which impacts overall system safety and disposal reliability. Passive separation mechanisms make use of natural phenomena (e.g. aerodynamic heating) seen by the spacecraft during its lifecycle in order to initiate the separation functionality.

An example for a two-part passive separation mechanism having passively separable connecting surfaces is disclosed in EP 3 085 627. This separation mechanism shows flat geometries for the connecting surfaces.

An example for a multi-part passive separation mechanism comprising more than two parts having passively separable connecting surfaces is shown in EP 3 246 256. It utilizes curved and flat geometries for the connecting surfaces and uses multiple joining materials.

Each of said known two-part and multi-part passive separation mechanisms requires that components of the separation mechanism for joining two spacecraft components can be mounted and dismounted repeatedly from the spacecraft components.

US 2019/031374 A1 discloses a Hold-down and Release Mechanisms (HRMs), which securely and strongly connect and hold down the deployable appendages of a space system during launch, and which release said deployable appendages upon reception of a command signal. The system includes a segmented tie rod that extends mainly parallelly to axis z and comprises a first segment and a second segment, that are soldered to one another by means of a solder alloy forming a solder joint between said first and second segments. The first and second segments have flat end surfaces connected together via the solder joint. An extractor spring is provided to facilitate the separation of between the first and second segments when the solder joint is molten.

US 2017/327251 A1 discloses passive devices designed to facilitate demise of space systems during re-entry into the Earth's atmosphere.

US 2003/121639 A1 discloses a heat discharger suitable for application in heat pipes intended for artificial space satellites. US2020/071005 A1 discloses a connection via two conical mating surfaces either via a weld or via an adhesive.

It is an object of the present application to provide a passive separation mechanism for spacecraft components for which design freedom, compatibility and easiness for system implementation as well as operational capabilities are enhanced while manufacturing complexity and costs as well as performance and reliability risks are reduced.

This object is solved by the separation mechanism for passive separation of a first spacecraft component from a second spacecraft component as defined in claim 1 and the spacecraft comprising said passive separation mechanism as defined in claim 9.

The separation mechanism for passive separation of a first spacecraft component from a second spacecraft component of claim 1 comprises first and second structural elements and joining means for mechanically joining the first and second structural elements together. The first structural element is adapted to be mounted to the first spacecraft component and has a receiving hole with an inner first connecting surface. The second structural element is adapted to be mounted to the second spacecraft component and is further adapted to be at least in part received within the receiving hole of the first structural element. The second structural element has an outer second connecting surface facing the inner first connecting surface when the second structural element is at least in part received within the receiving hole of the first structural element. The joining means for mechanically joining the first and second structural elements together via their first and second connecting surfaces is, in a joint state of the passive separation mechanism, sandwiched between the inner first connecting surface and the outer second connecting surface and connects these surfaces together when the second structural element is at least in part received within the receiving hole of the first structural element. The joining means is solder meltable at a temperature in the range of 100°C to 300°C. By choosing a solder having such a melting temperature, the first and second structural elements separate from each other when a temperature in the range of 100°C to 300°C is experienced by the separation mechanism. In the joint state of the passive separation mechanism, the joining means can be referred to as a solder joint.

A spacecraft usually is exposed to a temperature higher than 100°, in particular higher than 300°C during the early stage of the earth atmospheric re-entry phase. Thus, a separation of the passive separation mechanism of claim 1 can be triggered by exposure to the frictional heat experienced during earth atmospheric re-entry phase, especially by exposure to the frictional heat experienced by a spacecraft already during an early phase of earth atmospheric re-entry.

During the earth atmospheric re-entry phase, the spacecraft and, thus, its components, including the first and second components joint by the claimed passive separation mechanism, are heated. By a full or even already by a partial heat transfer from the components to the separation mechanism, the melting of the soldered connection, i.e., the solder joint, between the two structural elements of the separation mechanism is achieved. This entails the separation of the two structural elements of the separation mechanism and, thus, the separation of the first and second spacecraft components to which the first and second structural elements can be mounted respectively, which results in the spacecraft breaking into smaller pieces which can fully demise in the atmosphere.

Accordingly, the claimed separation mechanism works entirely passive and relies on the melting of a (metallic) alloy during the earth atmospheric re-entry phase. Therefore, no impact on spacecraft disposal reliability will occur during a mission of a spacecraft provided with the claimed separation mechanism.

**The** first and second connecting surfaces are of corresponding conical shape. Then, one can think of the first structural element to have the shape of a cone trunk, wherein the curved surface area of the cone trunk forms the second connecting surface.

In order to ensure a safe transfer of mechanical loads typically seen during operation by spacecraft components, the joining means and the shape and size of the connecting surfaces are to be chosen correspondingly to provide sufficient connecting strength for the joint of the first and second structural elements of the passive separation mechanism and, thus, for the first and second spacecraft components, throughout all operational temperature levels of the spacecraft mission prior to the spacecraft disposal phase, i.e., its earth atmospheric re-entry phase.

To ensure sufficient and uniform properties of the solder joint separation mechanism, i.e., strength during life time and/or mission of a spacecraft with which the separation mechanism can be used, and uniform melting of the solder at the end of life time and/or mission, the matching connecting surfaces of the structural elements are preferably aligned in the joint state or for realizing the joint state of the separation mechanism such that the (resulting) solder joint has a homogenous thickness.

The first structural element and the second structural element can be made of aluminium or aluminium alloys, such as 2000, 5000, 6000 and 7000 aluminium alloy series. Alternatively, the first structural element and the second structural element can be made of titanium or titanium alloys, such as Titanium grade 5 (Ti-6Al-4V). Also other materials such as composites or other metals can be used as long as these materials provide sufficient solder joint strength for the intended spacecraft requirement. I.e., generally, the material choice for the first and second structural elements as well as for the solder preferably depends on requirements of the mission planned for the spacecraft.

Solder can be applied to the first connecting surface and the second connecting surface irrespective of the chosen (substrate) material, e.g., aluminium, aluminium alloy, titanium or titanium alloy. However, to allow adhesion of the solder to the first connecting surface and the second connecting surface, at least one, and preferably both, of the first and second connecting surfaces can be silver-plated. The silver-plating on the connecting surface(s) may be applied by a galvanic process or any other industrial process capable of doing so. It is also conceivable to use other plating materials instead of silver, wherein the choice of the plating material preferably depends on the material of the connecting surface(s) and the solder type used. To realize the joint state of the passive separation mechanism, a homogeneous layer of solder is applied to one of the first and second connecting surfaces, and the first and second connecting surfaces are then joined by a soldering process, such as vacuum vapor phase soldering.

During the atmospheric re-entry phase, the atmospheric drag and the aerodynamic heating phenomena heat up the spacecraft and, thus, also the separation mechanism, which results in melting of the solder joint. Once molten, the solder joint loses its strength and the first and second structural elements of the passive separation mechanism separate from another. As the first and second structural elements are connected to the first and second spacecraft components, respectively, the latter entails the separation of the first and second spacecraft components.

Generally, the first structural element can have a first axis and the second structural element can have a second axis. The first and second axes can be collinear in the joint state of the separation mechanism.

Further, it is conceivable that the first structural element has a first through hole and/or the second structural element has a second through hole. In case the first structural element has a first axis and/or the second structural element has a second axis, the first through hole can extend along the first axis of the first structural element and/or the second through hole can extend along the second axis of the second structural element.

Preferably, the receiving hole of the first structural element forms a section of the first through hole of the first structural element.

Claim 9 defines a spacecraft comprising a first spacecraft component, a second spacecraft component, and the above-described passive separation mechanism. The first structural element is mounted to the first spacecraft component and the second structural element is mounted to the second spacecraft component.

Preferably, the first structural element of the passive separation mechanism is formed integrally with the first spacecraft component. In other words, the first structural element can be an integral part of the design and manufacturing of the first spacecraft component in a manner that mounting to and dismounting from the first spacecraft component is not intended without compromising the integrity of the first spacecraft component.

The second structural element of the passive separation mechanism may be fixedly or removably mounted to the second spacecraft component.

The first structural element can extend through a wall of the first spacecraft component such that a first end face of the first structural element extends parallel to a first surface of the wall and a second end face of the first structural element opposite the first end face extends parallel to a second surface of the wall opposite the first surface. The receiving hole then is formed in the first or second end face of the first structural element.

Preferably, when the first structural element extends through a wall of the first spacecraft component, the first through hole of the first structural element extends completely through the wall of the first spacecraft component.

In sum, the separation mechanism presented herein works in an entirely passive manner and can make use of any connecting surface geometry allowing sufficient separation reliability and solder joint strength.

A detailed description of an exemplary embodiment of the claimed passive separation mechanism provided in a spacecraft is given in the following with reference to the figures which show schematically:
- Fig. 1: a cross-section through an embodiment of the claimed passive separation mechanism connecting a first and a second spacecraft component together;
- Fig. 2: an oblique view of the first and second structural elements of the embodiment of the passive separation mechanism of Fig. 1, with the first and second structural elements separated from one another;
- Fig. 3: a general view of a spacecraft.

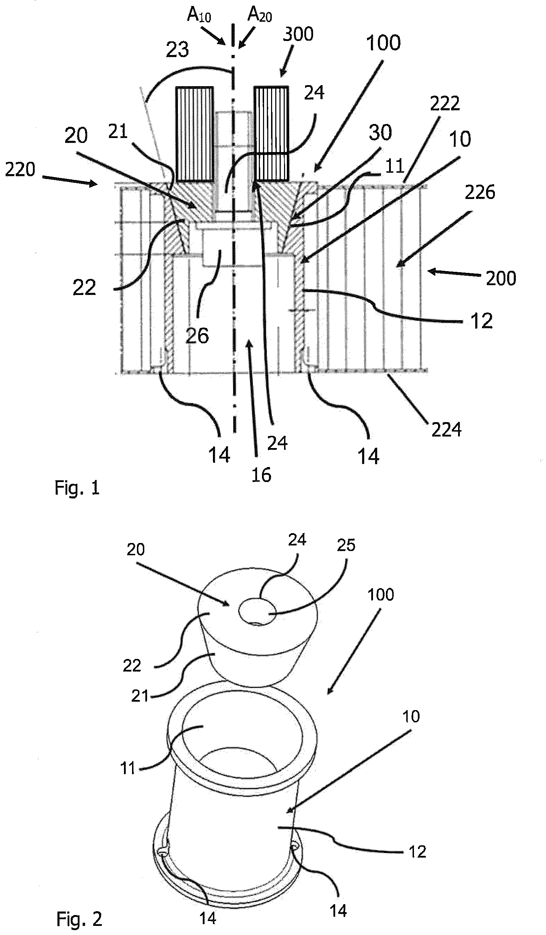

Fig. 1 shows a passive separation mechanism 100 connecting a first spacecraft component 200, which is a structural panel in Fig. 1, to a second spacecraft component 300. This connection is realized in the following manner. A first structural element 10 of the passive separation mechanism 100 is formed integrally with the first spacecraft component 200 and a second structural component 20 of the passive separation mechanism 100 is subsequently fastened to the second spacecraft component 300 by means of a screw or bolt 26 or other fastening means. In Fig. 1, a joint layer of solder 30 is sandwiched between a first connecting surface 11 of the first structural component 10 and a second connecting surface 21 of the second structural component 20 to form a solder joint between the first and second connecting surfaces 11, 21 of the first and second structural elements 10, 20.

Only sections of the first and second spacecraft components 200, 300 are shown in Fig. 1. The spacecraft components 200, 300 can be of any desired shape departing from the shapes shown in Fig. 1. In the oblique view of Fig. 2, the first and second spacecraft components 200, 300 as well as the screw 26 are omitted.

Fig. 1 shows a section of a wall 220 of the first spacecraft component 200. The wall 220 has opposed first and second surfaces 222, 224 and a core 226. A through hole or through bore extends through the wall 220 from the first wall surface 222 to the second wall surface 224 and through the core 226.

As shown in Figs. 1 and 2, the first structural element 10 of the passive separation mechanism 100 has the shape of a spool with a main section 12 in the form of a cylinder limited by first and second flanges at the opposed end faces of the cylinder.

According to Fig. 1, the spool-shaped first structural element 10 is inserted into the through hole or through bore through the wall 220 of the first spacecraft component 200. When in place with its first and second flange end faces extending approximately flush with the first and second wall surfaces 222, 224 of the first spacecraft component 200, the first structural element 10 is fixed in the through hole or through bore of the wall 220 by injection of a fixing means, such as a two-component adhesive or potting material, through bores 14 extending through the flange second end face of the spool. The fixing means fix the first structural element 10 to the first spacecraft component 200 in an integral, non-releasable manner. Two of the through bores 14 are shown in Figs. 1 and 2 through the second end face flange of the spool-shaped first structural element 10.

With further reference to Figs. 1 and 2, the spool-shaped first structural element 10 has an inner through hole 16 extending completely through the cylinder main body and flange sections of the first structural element 10. Said inner through hole 16 has a stepped inner surface. A step in the through hole 16 marks a transition between two hole sections of the through hole 16, namely a cylindrical hole section extending from the second end face flange towards the first end face flange of the spool-shaped first structural element 10 and a conical hole section tapering inwardly to a longitudinal spool axis A₁₀ of the first structural element 10 when extending from the first end face flange towards the second end face flange of the spool-shaped first structural element 10. An inner surface of the conical hole section forms the first connecting surface 11 of the first structural element 10. An opening angle 23 between the first connecting surface 11 and the axis A₁₀ is in the range of 0° to 45°. The first connecting surface 11 has a shape and opening angle 23 providing sufficient separation reliability on the one hand and sufficient solder joint strength on the other hand.

The second structural element 20 has the shape of a conical trunk snuggly fitting into the conical hole section of the first structural element 10, which acts as a receiving hole of the first structural element 10 for the second structural element 20.

Also the second structural element 20 has a through hole 24 extending from a first end face 22 of the conical trunk shaped second structural element 20 to an opposed second end face. Also the through hole 24 of the second structural element 20 has a stepped inner surface 25. Here a step in the through hole 24 marks a transition between a first cylindrical hole section and a second cylindrical hole section. The first cylindrical hole section has a smaller cross-section than the second cylindrical hole section and extends from the first end face 22 towards the second end face of the second structural element 20. The second cylindrical hole section which is of larger cross-section than the first cylindrical hole section is adapted to receive a head of screw 26. The transition step forms an abutment stop for the head of screw 26 and the first cylindrical hole section is adapted to receive a shaft section of screw 26. An inner surface of the first cylindrical hole section can be threaded.

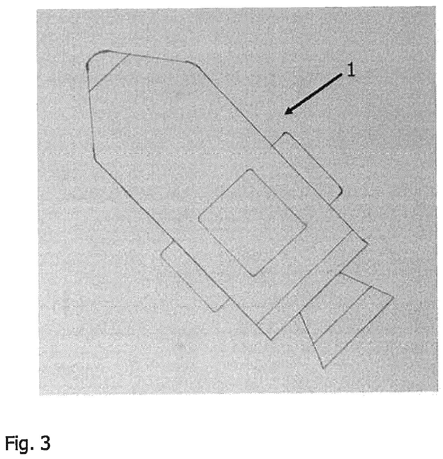

The first and second spacecraft components 200, 300 are components of the spacecraft 1 shown in Fig. 3 but are not further defined in Fig. 3.

## Claims

1. A passive separation mechanism (100) for passive separation of a first spacecraft component (200) from a second spacecraft component (300), the passive separation mechanism (100) comprising:
- a first structural element (10) having a receiving hole with an inner first connecting surface (11), the first structural element (10) adapted to be mounted to the first spacecraft component (200), and
- a second structural element (20) adapted to be at least in part received within the receiving hole of the first structural element (10) and having an outer second connecting surface (21) facing the inner first connecting surface (11) when the second structural element (20) is at least in part received within the receiving hole of the first structural element (10), the second structural element (20) adapted to be mounted to the second spacecraft component (300),
wherein the passive separation mechanism (100) further comprises:
- joining means (30) for mechanically joining the first and second structural elements (10, 20) together via their first and second connecting surfaces (11, 21), the joining means (30), in a joint state of the passive separation mechanism (100), sandwiched between and connecting the inner first connecting surface (11) and the outer second connecting surface (21) together when the second structural element (20) is at least in part received within the receiving hole of the first structural element (10), wherein the joining means (30) is solder meltable at a temperature in the range of 100°C to 300°C so as to separate the first and second structural elements (10, 20) when a melting temperature, i.e., a temperature in the range of 100°C to 300°C, is experienced by the separation mechanism (100),
- wherein the first and second connecting surfaces (11, 21) are of corresponding conical shape.

2. The passive separation mechanism (100) of claim 1, wherein the second structural element (20) has the shape of a cone trunk and the second connecting surface (21) is the curved surface area of the cone trunk.

3. The passive separation mechanism (100) of any one of claims 1 to 2, wherein the first structural element (10) has a first axis (A₁₀) and the second structural element (20) has a second axis (A₂₀), the first and second axes (A₁₀, A₂₀) being collinear in the joint state of the separation mechanism (100).

4. The passive separation mechanism (100) of any one claims 1 to 3, wherein the first structural element (10) has a first through hole (16) and/or the second structural element (20) has a second through hole (24).

5. The passive separation mechanism (100) of claim 4, as far as dependent on claim 5, wherein the first through hole (16) extends along the first axis (A₁₀) of the first structural element (10) and/or the second through hole (24) extends along the second axis (A₂₀) of the second structural element (20).

6. The passive separation mechanism (100) of claim 4 or 5, wherein the receiving hole of the first structural element (10) forms a section of the first through hole (16).

7. The passive separation mechanism (100) of any one of claims 1 to 6, wherein the first structural element (10) and the second structural element (20) are made of aluminium or titanium alloys.

8. The passive separation mechanism (100) of any one of claims 1 to 7, wherein the first connecting surface (11) and the second connecting surface (21) are silver-plated.

9. A spacecraft (1) comprising:
- a first spacecraft component (200),
- a second spacecraft component (300), and
- the passive separation mechanism (100) of any one of claims 1 to 8, wherein the first structural element (10) is mounted to the first spacecraft component (200) and the second structural element (20) is mounted to the second spacecraft component (300).

10. The spacecraft (1) of claim 9, wherein the first structural element (10) of the passive separation mechanism (100) is formed integrally with the first spacecraft component (200).

11. The spacecraft (1) of claim 9 or 10, wherein the second structural element (20) of the passive separation mechanism (100) is fixedly or removably mounted to the second spacecraft component (300).

12. The spacecraft (1) of any one of claims 9 to 11, wherein the first structural element (10) extends through a wall (220) of the first spacecraft component (200) such that a first end face of the first structural element (10) extends parallel to a first surface (222) of the wall (220) and a second end face of the first structural element (10) opposite the first end face extends parallel to a second surface (224) of the wall (220) opposite the first surface (222), wherein the receiving hole is formed in the first or second end face of the first structural element (10).

13. The spacecraft (1) of claim 12, wherein the first through hole (16) of the first structural element (10) extends completely through the wall (220) of the first spacecraft component (200).

## Patentansprüche

1. Passiver Trennmechanismus (100) zur passiven Trennung einer ersten Raumfahrzeugkomponente (200) von einer zweiten Raumfahrzeugkomponente (300), wobei der passive Trennmechanismus (100) umfasst:
- ein erstes Strukturelement (10), das ein Aufnahmeloch mit einer inneren ersten Verbindungsfläche (11) aufweist, wobei das erste Strukturelement (10) an der ersten Raumfahrzeugkomponente (200) montierbar ist, und
- ein zweites Strukturelement (20), das dazu eingerichtet ist, zumindest teilweise in dem Aufnahmeloch des ersten Strukturelements (10) aufgenommen zu werden, und das eine äußere zweite Verbindungsfläche (21) aufweist, die der inneren ersten Verbindungsfläche (11) zugewandt ist, wenn das zweite Strukturelement (20) zumindest teilweise in dem Aufnahmeloch des ersten Strukturelements (10) aufgenommen ist, wobei das zweite Strukturelement (20) dazu eingerichtet ist, an der zweiten Raumfahrzeugkomponente (300) montiert zu werden,
wobei der passive Trennmechanismus (100) ferner umfasst:
- ein Verbindungsmittel (30) zum mechanischen Verbinden des ersten und des zweiten Strukturelements (10, 20) miteinander über ihre erste und ihre zweite Verbindungsfläche (11, 21), wobei das Verbindungsmittel (30) in einem verbundenen Zustand des passiven Trennmechanismus (100) zwischen der inneren ersten Verbindungsfläche (11) und der äußeren zweiten Verbindungsfläche (21) angeordnet ist und diese miteinander verbindet, wenn das zweite Strukturelement (20) zumindest teilweise in dem Aufnahmeloch des ersten Strukturelements (10) aufgenommen ist, wobei das Verbindungsmittel (30) bei einer Temperatur im Bereich von 100°C bis 300°C schmelzbar ist, um das erste und das zweite Strukturelement (10, 20) zu lösen, wenn der Trennmechanismus (100) einer Schmelztemperatur, d. h.e., einer Temperatur in dem Bereich von 100°C bis 300°C ausgesetzt ist,
- wobei die erste und die zweite Verbindungsfläche (11, 21) eine entsprechende konische Form haben.

2. Passiver Trennmechanismus (100) nach Anspruch 1, wobei das zweite Strukturelement (20) die Form eines Kegelstumpfes hat und die zweite Verbindungsfläche (21) der gekrümmte Oberflächenbereich des Kegelstumpfes ist.

3. Passiver Trennmechanismus (100) nach einem der Ansprüche 1 bis 2, wobei das erste Strukturelement (10) eine erste Achse (A₁₀ ) aufweist und das zweite Strukturelement (20) eine zweite Achse (A₂₀ ) aufweist, wobei die erste und die zweite Achse (A₁₀ , A₂₀ ) im verbundenen Zustand des Trennmechanismus (100) kollinear sind.

4. Passiver Trennmechanismus (100) nach einem der Ansprüche 1 bis 3, wobei das erste Strukturelement (10) ein erstes Durchgangsloch (16) und/oder das zweite Strukturelement (20) ein zweites Durchgangsloch (24) aufweist.

5. Passiver Trennmechanismus (100) nach Anspruch 4, soweit von Anspruch 5 abhängig, wobei sich das erste Durchgangsloch (16) entlang der ersten Achse (A₁₀ ) des ersten Strukturelements (10) erstreckt und/oder sich das zweite Durchgangsloch (24) entlang der zweiten Achse (A₂₀ ) des zweiten Strukturelements (20) erstreckt.

6. Passiver Trennmechanismus (100) nach Anspruch 4 oder 5, wobei das Aufnahmeloch des ersten Strukturelements (10) einen Abschnitt des ersten Durchgangslochs (16) bildet.

7. Passiver Trennmechanismus (100) nach einem der Ansprüche 1 bis 6, wobei das erste Strukturelement (10) und das zweite Strukturelement (20) aus Aluminium- oder Titanlegierungen hergestellt sind.

8. Passiver Trennmechanismus (100) nach einem der Ansprüche 1 bis 7, wobei die erste Verbindungsfläche (11) und die zweite Verbindungsfläche (21) versilbert sind.

9. Raumfahrzeug (1), das umfasst:
- eine erste Raumfahrzeugkomponente (200),
- eine zweite Raumfahrzeugkomponente (300), und
- den passiven Trennmechanismus (100) nach einem der Ansprüche 1 bis 8, wobei das erste Strukturelement (10) an der ersten Raumfahrzeugkomponente (200) montiert ist und das zweite Strukturelement (20) an der zweiten Raumfahrzeugkomponente (300) montiert ist.

10. Raumfahrzeug (1) nach Anspruch 9, wobei das erste Strukturelement (10) des passiven Trennmechanismus (100) einstückig mit der ersten Raumfahrzeugkomponente (200) ausgebildet ist.

11. Raumfahrzeug (1) nach Anspruch 9 oder 10, wobei das zweite Strukturelement (20) des passiven Trennmechanismus (100) fest oder lösbar an der zweiten Raumfahrzeugkomponente (300) montiert ist.

12. Raumfahrzeug (1) nach einem der Ansprüche 9 bis 11, wobei sich das erste Strukturelement (10) durch eine Wand (220) der ersten Raumfahrzeugkomponente (200) erstreckt, so dass sich eine erste Endfläche des ersten Strukturelements (10) parallel zu einer ersten Oberfläche (222) der Wand (220) erstreckt und sich eine zweite Endfläche des ersten Strukturelements (10) gegenüber der ersten Endfläche parallel zu einer zweiten Oberfläche (224) der Wand (220) gegenüber der ersten Oberfläche (222) erstreckt, wobei das Aufnahmeloch in der ersten oder zweiten Endfläche des ersten Strukturelements (10) ausgebildet ist.

13. Raumfahrzeug (1) nach Anspruch 12, wobei sich das erste Durchgangsloch (16) des ersten Strukturelements (10) vollständig durch die Wand (220) der ersten Raumfahrzeugkomponente (200) erstreckt.

## Revendications

1. Mécanisme de séparation passive (100) pour séparer passivement un premier composant d'engin spatial (200) d'un second composant d'engin spatial (300), le mécanisme de séparation passive (100) comprenant:
- un premier élément structural (10) ayant un trou de réception doté d'une première surface de liaison interne (11), le premier élément structural (10) pouvant être monté sur le premier composant d'engin spatial (200), et
- un second élément structural (20) adapté pour être reçu, au moins en partie, dans le trou de réception du premier élément structural (10) et ayant une seconde surface de liaison externe (21) faisant face à la première surface de liaison interne (11) lorsque le second élément structural (20) est reçu, au moins en partie, dans le trou de réception du premier élément structural (10), le second élément structural (20) étant adapté pour être monté sur le second composant de véhicule spatial (300),
dans lequel le mécanisme de séparation passif (100) comprend en outre:
- un moyen de liaison (30) pour relier mécaniquement les premier et second éléments structuraux (10, 20) l'un à l'autre par l'intermédiaire de leurs première et seconde surfaces de liaison (11, 21), le moyen de liaison (30), lorsque le mécanisme de séparation passive (100), intercalé entre et reliant la première surface de liaison interne (11) et la seconde surface de liaison externe (21), lorsque le second élément structural (20) est, au moins en partie, reçu dans le trou de réception du premier élément structural (10), le moyen de liaison (30) pouvant être fondu à une température dans la plage de 100°C à 300°C pour séparer les premier et second éléments structuraux (10, 20) lorsque le mécanisme de séparation (100) est soumis à une température de fusion, c'est-à-dire, à une température dans la gamme de 100°C à 300°C,
- dans lequel les première et seconde surfaces de liaison (11, 21) ont une forme conique correspondante.

2. Mécanisme de séparation passif (100) selon la revendication 1, dans lequel le seconde élément structural (20) a la forme d'un cône tronqué et la seconde surface de liaison (21) est la partie de surface incurvée du cône tronqué.

3. Mécanisme de séparation passif (100) selon l'une quelconque des revendications 1 à 2, dans lequel le premier élément structural (10) comprend un premier axe (A₁₀) et le second élément structural (20) comprend un second axe (A₂₀), les premier et second axes (A₁₀ , A₂₀) étant colinéaires lorsque le mécanisme de séparation (100) est relié.

4. Mécanisme de séparation passif (100) selon l'une quelconque des revendications 1 à 3, dans lequel le premier élément structural (10) comporte un premier trou traversant (16) et/ou le second élément structural (20) comporte un second trou traversant (24).

5. Mécanisme de séparation passif (100) selon la revendication 4, lorsqu'elle est dépendante de la revendication 5, dans lequel le premier trou traversant (16) s'étend le long du premier axe (A₁₀) du premier élément structural (10) et/ou le second trou traversant (24) s'étend le long du second axe (A₂₀) du second élément structural (20).

6. Mécanisme de séparation passif (100) selon la revendication 4 ou 5, dans lequel le trou de réception du premier élément structural (10) forme une partie du premier trou traversant (16).

7. Mécanisme de séparation passif (100) selon l'une quelconque des revendications 1 à 6, dans lequel le premier élément structural (10) et le second élément structural (20) sont réalisés en alliages d'aluminium ou de titane.

8. Mécanisme de séparation passif (100) selon l'une quelconque des revendications 1 à 7, dans lequel la première surface de liaison (11) et la seconde surface de liaison (21) sont plaquées argent.

9. Véhicule spatial (1) comprenant:
- un premier composant d'engin spatial (200)
- un second composant d'engin spatial (300), et
- le mécanisme de séparation passif (100) selon l'une quelconque des revendications 1 à 8, dans lequel le premier élément structural (10) est monté sur le premier composant d'engin spatial (200) et le second élément structural (20) est monté sur le second composant d'engin spatial (300).

10. Véhicule spatial (1) selon la revendication 9, dans lequel le premier élément structural (10) du mécanisme de séparation passif (100) est formé d'un seul tenant avec le premier composant (200) du véhicule spatial.

11. Véhicule spatial (1) selon la revendication 9 ou 10, dans lequel le seconde élément structural (20) du mécanisme de séparation passif (100) est monté à demeure ou amovible sur le second composant (300) du véhicule spatial.

12. Véhicule spatial (1) selon l'une des revendications 9 à 11, dans lequel le premier élément structural (10) s'étend à travers une paroi (220) du premier composant (200) du véhicule spatial, de sorte qu'une première face d'extrémité du premier élément structural (10) s'étend parallèlement à une première surface (222) de la paroi (220) et une seconde face d'extrémité du premier élément structural (10) en regard de la première face d'extrémité s'étend parallèlement à une seconde surface (224) de la paroi (220) en regard de la première surface (222), le trou de réception étant formé dans la première ou seconde face d'extrémité du premier élément structural (10).

13. Véhicule spatial (1) selon la revendication 12, dans lequel le premier trou traversant (16) du premier élément structural (10) s'étend entièrement à travers la paroi (220) du premier composant de véhicule spatial (200).
